# EUROPÄISCHE PATENTANMELDUNG

(11) **EP 4 064 739 A1**
(43) Veröffentlichungstag der Anmeldung: **28.09.2022**
(21) Anmeldenummer: 22161395.3
(22) Anmeldetag: 10.03.2022
(51) Int. Cl.: H04W 4/44, H04W 4/021, G08G 1/09

(54) **VERKEHRSEINRICHTUNG**

(30) Priorität: 23.03.2021 DE 102021202776
(71) Anmelder: Robert Bosch GmbH, 70442 Stuttgart (DE)
(72) Erfinder: Wilbrand, Uwe, 71397 Leutenbach (DE); Mindt, Holger, 71711 Steinheim A. D. Murr (DE); Boerger, Joachim, 70193 Stuttgart (DE)

(57) **Zusammenfassung**

Die Erfindung betrifft eine Verkehrseinrichtung, umfassend:
einen Speicher, welcher eingerichtet ist, eine Position der Verkehrseinrichtung zu speichern, und
eine Kommunikationsschnittstelle, welche eingerichtet ist, die gespeicherte Position über ein drahtloses Kommunikationsnetzwerk zu senden.

Die Erfindung betrifft weiter ein Verfahren zum Betreiben einer Verkehrseinrichtung, ein Computerprogramm und ein maschinenlesbares Speichermedium.

## Beschreibung

Die Erfindung betrifft eine Verkehrseinrichtung, ein Verfahren zum Betreiben einer Verkehrseinrichtung, ein Computerprogramm und ein maschinenlesbares Speichermedium.

### Stand der Technik

Die Übersetzung DE 601 28 777 T2 der europäischen Patentschrift EP 1 209 648 B1 offenbart eine Vorrichtung zur Übermittlung von Positionsdaten mit einem Bezugspunkt an die Fahrbahn.

Die Offenlegungsschrift DE 10 2017 114 049 A1 offenbart ein System zum Auswählen von Routen für autonome Fahrzeuge.

Generell für Straßenverkehrsteilnehmer und insbesondere für automatisiert fahrende Kraftfahrzeuge können Baustellen und die daraus resultierende geänderte Streckenführung einen Gefahrenschwerpunkt darstellen. Die Erkennung der Baustelle mit einer geänderten Streckenführung sowie die konkrete Erkennung der dann gültigen Streckenführung kann schwer sein. Vor allem für automatisierte Kraftfahrzeuge kann es sehr herausfordernd sein, sich zwischen Baken, der ursprünglich geltenden weißen Straßenmarkierung, den dann neu angebrachten gelben Baustellen-Straßenmarkierungen und teilweise sogar fehlenden Markierungen zurechtzufinden.

Allgemein besteht ein Bedarf, dass zumindest teilautomatisiert geführte Kraftfahrzeuge Verkehrseinrichtungen, die zum Beispiel bestimmte Bereiche innerhalb einer Baustelle für einen Fahrzeugverkehr absperren, effizient zu lokalisieren.

### Offenbarung der Erfindung

Die der Erfindung zugrunde liegende Aufgabe ist darin zu sehen, ein Konzept bereitzustellen, welches es effizient ermöglicht, dass ein Kraftfahrzeug eine Verkehrseinrichtung effizient lokalisieren kann.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem ersten Aspekt wird eine Verkehrseinrichtung bereitgestellt, umfassend:
einen Speicher, welcher eingerichtet ist, eine Position der Verkehrseinrichtung zu speichern, und
eine Kommunikationsschnittstelle, welche eingerichtet ist, die gespeicherte Position über ein drahtloses Kommunikationsnetzwerk zu senden.

Nach einem zweiten Aspekt wird ein Verfahren zum Betreiben einer Verkehrseinrichtung nach dem ersten Aspekt bereitgestellt, umfassend die folgenden Schritte:
Speichern einer Position der Verkehrseinrichtung in dem Speicher und
Senden der gespeicherten Position über das drahtlose Kommunikationsnetzwerk mittels der Kommunikationsschnittstelle.

Nach einem dritten Aspekt wird ein Computerprogramm bereitgestellt, welches Befehle umfasst, die bei Ausführung des Computerprogramms durch einen Computer, insbesondere durch die Verkehrseinrichtung nach dem ersten Aspekt, diesen veranlassen, ein Verfahren gemäß dem zweiten Aspekt auszuführen.

Nach einem vierten Aspekt wird ein maschinenlesbares Speichermedium bereitgestellt, auf dem das Computerprogramm nach dem dritten Aspekt gespeichert ist.

Die Erfindung basiert auf der Erkenntnis und schließt diese mit ein, dass die obige Aufgabe dadurch gelöst wird, dass die Verkehrseinrichtung ihre eigene Position über ein drahtloses Kommunikationsnetzwerk sendet. Dadurch wird zum Beispiel der technische Vorteil bewirkt, dass die Position der Verkehrseinrichtung effizient entfernt bereitgestellt werden kann. Dadurch kann zum Beispiel ein Kraftfahrzeug über das drahtlose Kommunikationsnetzwerk die gesendete Position empfangen und basierend auf der empfangenen Position die Verkehrseinrichtung lokalisieren. Somit kann die Verkehrseinrichtung effizient lokalisiert werden durch zum Beispiel zumindest teilautomatisiert geführte Kraftfahrzeuge.

Die in dieser Beschreibung verwendete Formulierung "in einer Ausführungsform der Verkehrseinrichtung" umfasst die Formulierung "in einer Ausführungsform der Verkehrseinrichtung, wobei die Ausführungsform zum Beispiel die jeweiligen Merkmale von zumindest einer der in der Beschreibung beschriebenen Ausführungsformen umfasst". Das heißt also, dass die jeweiligen Merkmale der in der Beschreibung beschriebenen Ausführungsformen der Verkehrseinrichtung zum Beispiel in beliebiger Kombination stehen können. Gleiches gilt in analoger Weise für das Verfahren nach dem zweiten Aspekt.

Das heißt also, dass sich Merkmale der Verkehrseinrichtung unmittelbar aus entsprechenden Merkmalen des Verfahrens und umgekehrt ergeben können.

In einer Ausführungsform der Verkehrseinrichtung ist vorgesehen, dass die Position der Verkehrseinrichtung in dem Speicher gespeichert ist.

In einer Ausführungsform der Verkehrseinrichtung ist vorgesehen, dass der Speicher eingerichtet ist, zumindest eine Bereichsinformation über einen durch die Verkehrseinrichtung abgesperrten Bereich zu speichern, wobei die Kommunikationsschnittstelle eingerichtet ist, die gespeicherte zumindest eine Bereichsinformation über das drahtlose Kommunikationsnetzwerk zu senden.

Dadurch wird zum Beispiel der technische Vorteil bewirkt, dass die zumindest eine Bereichsinformation effizient entfernt bereitgestellt werden kann.

In einer Ausführungsform der Verkehrseinrichtung ist vorgesehen, dass die zumindest eine Bereichsinformation in dem Speicher gespeichert ist.

In einer Ausführungsform der Verkehrseinrichtung ist vorgesehen, dass der Speicher eingerichtet ist, zumindest eine semantische Information über ein Umfeld der Verkehrseinrichtung zu speichern, wobei die Kommunikationsschnittstelle eingerichtet ist, die gespeicherte zumindest eine semantische Information über das drahtlose Kommunikationsnetzwerk zu senden.

Dadurch wird zum Beispiel der technische Vorteil bewirkt, dass die zumindest eine semantische Information effizient entfernt bereitgestellt werden kann.

In einer Ausführungsform der Verkehrseinrichtung ist vorgesehen, dass die zumindest eine semantische Information in dem Speicher gespeichert ist.

In einer Ausführungsform der Verkehrseinrichtung ist vorgesehen, dass die zumindest eine semantische Information ein oder mehrere Elemente der folgenden Gruppe von semantischen Informationen umfasst: Geschwindigkeitslimit, Breite eines oder mehrerer Fahrstreifen, Krümmung eines oder mehrerer Fahrstreifen.

Dadurch wird zum Beispiel der technische Vorteil bewirkt, dass besonders geeignete semantische Informationen vorgesehen sind.

Gemäß einer Ausführungsform der Verkehrseinrichtung ist vorgesehen, dass diese ferner einen Positionssensor, zum Beispiel GPS- und/oder GLONASS-Sensor, zum Erfassen einer Position der Verkehrseinrichtung umfasst, wobei der Speicher eingerichtet ist, die erfasste Position zu speichern, wobei die Kommunikationsschnittstelle eingerichtet ist, die gespeicherte erfasste Position über das drahtlose Kommunikationsnetzwerk zu senden.

Dadurch wird zum Beispiel der technische Vorteil bewirkt, dass die Verkehrseinrichtung selbst ihre Position bestimmen kann.

In einer Ausführungsform der Verkehrseinrichtung ist vorgesehen, dass die erfasste Position in dem Speicher gespeichert ist.

In einer Ausführungsform der Verkehrseinrichtung ist vorgesehen, dass die Kommunikationsschnittstelle eingerichtet ist, eine Position der Verkehrseinrichtung über das drahtlose Kommunikationsnetzwerk zu empfangen, wobei der Speicher eingerichtet ist, die empfangene Position der Verkehrseinrichtung zu speichern, wobei die Kommunikationsschnittstelle eingerichtet ist, die gespeicherte empfangene Position der Verkehrseinrichtung über das drahtlose Kommunikationsnetzwerk zu senden.

Dadurch wird zum Beispiel der technische Vorteil bewirkt, dass der Verkehrseinrichtung effizient ihre Position angelernt werden kann.

In einer Ausführungsform der Verkehrseinrichtung ist vorgesehen, dass die empfangene Position in dem Speicher gespeichert ist.

In einer Ausführungsform der Verkehrseinrichtung ist vorgesehen, dass die Position eine absolute und/oder eine relativ zu einer vorbestimmten Referenzposition relative Position umfasst.

Dadurch wird zum Beispiel der technische Vorteil bewirkt, dass die Position effizient festgelegt beziehungsweise definiert ist.

In einer Ausführungsform der Verkehrseinrichtung ist vorgesehen, dass die Kommunikationsschnittstelle eingerichtet ist, die gespeicherte Position über das drahtlose Kommunikationsnetzwerk an eine RSU und/oder direkt an ein Kraftfahrzeug im Umfeld der Verkehrseinrichtung zu senden.

Dadurch wird zum Beispiel der technische Vorteil bewirkt, dass die Position der Verkehrseinrichtung effizient der RSU bereitgestellt werden kann, sodass diese in vorteilhafter Weise in die Lage versetzt wird, die empfangene Position der Verkehrseinrichtung weiter an ein oder mehrere Kraftfahrzeuge über das drahtlose Kommunikationsnetzwerk zu senden. Weiter kann dadurch zum Beispiel der technische Vorteil bewirkt werden, dass die Position der Verkehrseinrichtung direkt dem Kraftfahrzeug bereitgestellt werden kann.

In einer Ausführungsform der Verkehrseinrichtung ist vorgesehen, dass diese ein Element ausgewählt aus der folgenden Gruppe von Verkehrseinrichtungen ist: Schranke, Sperrpfosten, Absperrgerät, Leiteinrichtung, Absperrschranke, Leitbake, Leitschwelle, Leitbord, Leitkegel, fahrbare Absperrtafel, fahrbare Absperrtafel mit Blinkpfeil, Richtungstafel in Kurven, Leitplatte, Leitmal, Leitpfosten, Parkwarntafel.

Dadurch wird zum Beispiel der technische Vorteil bewirkt, dass besonders geeignete Verkehrseinrichtungen vorgesehen sind.

Ein Leitkegel kann zum Beispiel auch als ein Pylon bezeichnet werden.

In einer Ausführungsform des Verfahrens ist vorgesehen, dass die zumindest eine Bereichsinformation über einen durch die Verkehrseinrichtung abgesperrten Bereich in dem Speicher gespeichert wird, wobei die gespeicherte zumindest eine Bereichsinformation mittels der Kommunikationsschnittstelle über das drahtlose Kommunikationsnetzwerk gesendet wird.

In einer Ausführungsform des Verfahrens ist vorgesehen, dass die zumindest eine semantische Information über ein Umfeld der Verkehrseinrichtung in dem Speicher gespeichert wird, wobei die gespeicherte zumindest eine semantische Information mittels der Kommunikationsschnittstelle über das drahtlose Kommunikationsnetzwerk gesendet wird.

In einer Ausführungsform des Verfahrens ist vorgesehen, dass die Position der Verkehrseinrichtung mittels des Positionssensors erfasst wird, wobei die erfasste Position in dem Speicher gespeichert wird, wobei die gespeicherte erfasste Position mittels der Kommunikationsschnittstelle über das drahtlose Kommunikationsnetzwerk gesendet wird.

In einer Ausführungsform des Verfahrens ist vorgesehen, dass mittels der Kommunikationsschnittstelle eine Position der Verkehrseinrichtung über das drahtlose Kommunikationsnetzwerk empfangen wird, wobei die empfangene Position der Verkehrseinrichtung in dem Speicher gespeichert wird, wobei die gespeicherte empfangene Position der Verkehrseinrichtung mittels der Kommunikationsschnittstelle über das drahtlose Kommunikationsnetzwerk gesendet wird.

In einer Ausführungsform des Verfahrens ist vorgesehen, dass die gespeicherte Position mittels der Kommunikationsschnittstelle über das drahtlose Kommunikationsnetzwerk an eine RSU und/oder direkt an ein Kraftfahrzeug im Umfeld der Verkehrseinrichtung gesendet wird.

Die Abkürzung "RSU" steht für "Road-Side-Unit". Der Begriff "Road-Side-Unit" kann ins Deutsche mit "straßenseitige Einheit" oder mit "straßenseitige Infrastruktureinheit" übersetzt werden. Anstelle des Begriffs "RSU" können auch folgende Begriffe synonym verwendet werden. Straßenseitige Einheit, straßenseitige Infrastruktureinheit, Kommunikationsmodul, straßenseitiges Kommunikationsmodul, straßenseitige Funkeinheit, straßenseitige Sendestation.

In einer Ausführungsform des Verfahrens ist vorgesehen, dass das Verfahren ein computerimplementiertes Verfahren ist.

In einer Ausführungsform der Verkehrseinrichtung ist vorgesehen, dass diese eingerichtet ist, das Verfahren nach dem zweiten Aspekt aus- oder durchzuführen.

Die Abkürzung "bzw." steht für "beziehungsweise". "Beziehungsweise" steht für beispielsweise für "respektive". "Respektive" steht beispielsweise für "und/oder".

Die Formulierung "zumindest ein(e)" bedeutet "ein(e) oder mehrere".

In einer Ausführungsform der Verkehrseinrichtung ist diese gemäß § 43 der deutschen Straßenverkehrs-Ordnung definiert. § 43 Absatz 1 Straßenverkehrs-Ordnung wird wie folgt wiedergegeben:
Verkehrseinrichtungen sind Schranken, Sperrpfosten, Absperrgeräte sowie Leiteinrichtungen, die bis auf Leitpfosten, Leitschwellen und Leitborde rot-weißgestreift sind. Leitschwellen und Leitborde haben die Funktion einer vorübergehend gültigen Markierung und sind gelb. Verkehrseinrichtungen sind außerdem Absperrgeländer, Parkuhren, Parkscheinautomaten, Blinklicht und Lichtzeichenanlagen sowie Verkehrsbeeinflussungsanlagen.

Absatz 3 von § 43 Straßenverkehrs-Ordnung lautet wie folgt: Verkehrseinrichtungen nach Absatz 1 Satz 1 ergeben sich aus Anlage 4. Die durch Verkehrseinrichtungen (Anlage 4, Nr. 1 bis 7) gekennzeichneten Straßenflächen darf der Verkehrsteilnehmer nicht befahren.

Anlage 4 Nr. 1 bis 7 der Straßenverkehrs-Ordnung definiert folgende Verkehrseinrichtungen: Absperrschranke, Leitbake, welche zum Beispiel eine Pfeilbake oder eine Schraffenbake sein kann, Leitschwelle, welche zum Beispiel eine Leitschwelle mit Pfeilbake oder eine Leitschwelle Schraffenbake sein kann, Leitbord, welches zum Beispiel ein Leitbord mit Pfeilbake oder ein Leitbord mit Schraffenbake sein kann, Leitkegel, umgangssprachlich auch als Pylon bezeichnet, fahrbare Absperrtafel, fahrbare Absperrtafel mit Blinkpfeil.

In einer Ausführungsform der Verkehrseinrichtung ist diese eine mobile Verkehrseinrichtung, also zum Beispiel eine frei aufstellbare Verkehrseinrichtung.

Ausführungsbeispiele der Erfindung sind in den Zeichnungen dargestellt und in der nachfolgenden Beschreibung näher erläutert. Es zeigen:
- Fig. 1: eine Verkehrseinrichtung,
- Fig. 2: ein Ablaufdiagramm eines Verfahrens zum Betreiben einer Verkehrseinrichtung,
- Fig. 3: ein maschinenlesbares Speichermedium und
- Fig. 4: eine Verkehrssituation.

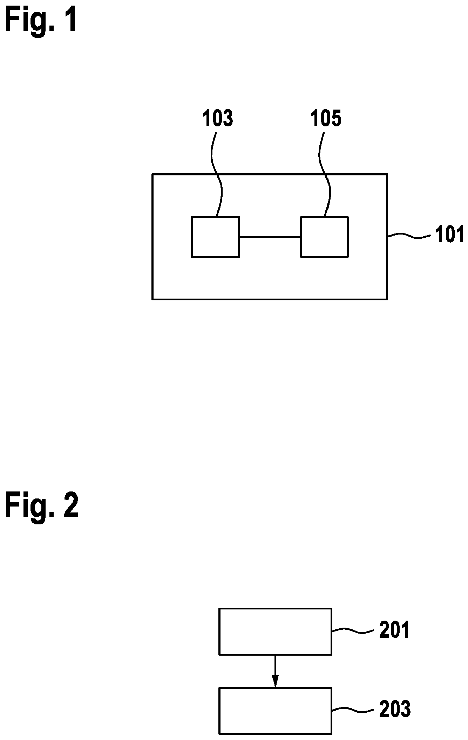

Fig. 1 zeigt eine Verkehrseinrichtung 101, umfassend:
einen Speicher 103, welcher eingerichtet ist, eine Position der Verkehrseinrichtung zu speichern, und
eine Kommunikationsschnittstelle 105, welche eingerichtet ist, die gespeicherte Position über ein drahtloses Kommunikationsnetzwerk zu senden.

Fig. 2 zeigt ein Ablaufdiagramm eines Verfahrens zum Betreiben der Verkehrseinrichtung der Fig. 1, wobei das Verfahren die folgenden Schritte umfasst:

Speichern 201 einer Position der Verkehrseinrichtung 101 in dem Speicher 103 und
Senden 203 der gespeicherten Position über das drahtlose Kommunikationsnetzwerk mittels der Kommunikationsschnittstelle 105.

In einer Ausführungsform der Verkehrseinrichtung umfasst das drahtlose Kommunikationsnetzwerk ein WLAN-Netz und/oder ein Mobilfunknetz.

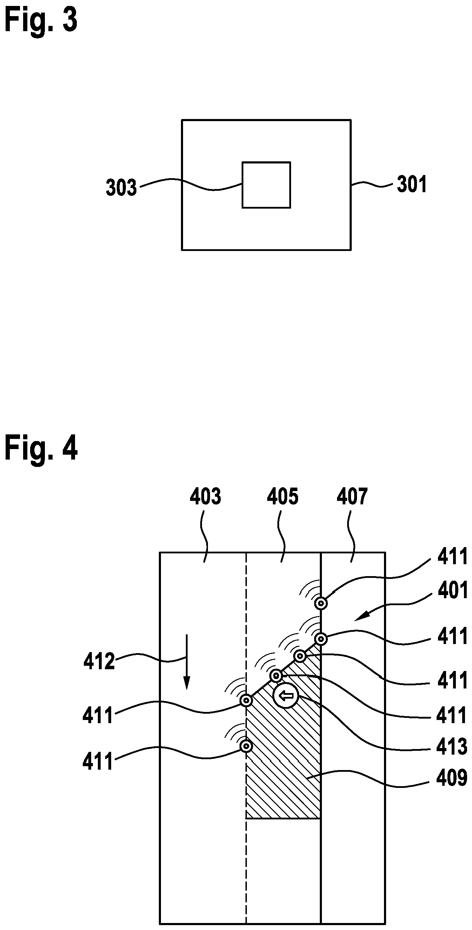

Fig. 3 zeigt ein maschinenlesbares Speichermedium 301, auf dem ein Computerprogramm 303 gespeichert ist. Das Computerprogramm 303 umfasst Befehle, die bei Ausführung des Computerprogramms 303 durch einen Computer, insbesondere durch die Verkehrseinrichtung gemäß Fig. 1, diesen veranlassen, ein Verfahren gemäß Fig. 2 auszuführen.

Fig. 4 zeigt eine Verkehrssituation 401. Gemäß der Verkehrssituation 401 ist ein erster Fahrstreifen 403 und ist ein zweiter Fahrstreifen 405 und ist ein Standstreifen 407 gezeichnet. Eine vorgegebene Fahrtrichtung für Kraftfahrzeuge, welche auf den Fahrstreifen 403, 405 fahren, ist durch einen Pfeil mit dem Bezugszeichen 412 gekennzeichnet. Diese Richtung verläuft bezogen auf die Papierebene von oben nach unten. Die Begriffe Fahrspur und Fahrstreifen werden nachfolgend synonym verwendet.

Die Fahrspur bzw. der Fahrstreifen 405 befindet sich zwischen dem Fahrstreifen 403 und dem Standstreifen 407. Auf dem Fahrstreifen 405 befindet sich eine Baustelle bzw. ist ein Baustellenbereich vorgesehen, welcher durch eine Schraffur mit dem Bezugszeichen 409 gekennzeichnet ist. Dieser Baustellenbereich 409 darf durch Kraftfahrzeuge nicht befahren werden.

Um dieses Gebot des Nichtbefahrens kenntlich zu machen, sind mehrere Leitkegel 411 vorgesehen, die zumindest teilweise um den Bereich 409 herum angeordnet sind. Diese Leitkegel 411 sind analog zu der Verkehrseinrichtung 101 gemäß Fig. 1 ausgebildet. Das heißt also, dass die Leitkegel 411 jeweils einen Speicher und eine Kommunikationsschnittstelle umfassen, wobei diese Elemente der Übersicht halber nicht gezeigt sind.

Weiter ist ein Verkehrszeichen 413 vorgesehen, welches einem Verkehr auf der Fahrspur bzw. auf dem Fahrstreifen 405 signalisiert, dass es bezogen auf die Fahrtrichtung 407 nach rechts fahren soll. Es handelt sich hierbei um das Zeichen 211 gemäß deutscher Straßenverkehrs-Ordnung.

Die Leitkegel 411 sind also frei aufstellbare Leitkegel und bilden einen Verbund, welcher einen Bereich aufspannt, der nicht befahren werden darf: der schraffierte Bereich 409. Selbst wenn ein Leitkegel 411 umgefahren werden sollte, wird dennoch weiterhin der schraffierte Bereich 409 durch die redundant sendenden Leitkegel-Kollegen 411 weiterhin eindeutig markiert.

Die Leitkegel 411 senden zum Beispiel in einem Broadcast-Verfahren an alle sich nähernde Kraftfahrzeuge ihre jeweilige Position. Zusätzlich kann vorgesehen sein, dass zumindest eine Bereichsinformation gesendet wird. Zusätzlich kann vorgesehen sein, dass zumindest eine semantische Information jeweils durch die Leitkegel 411 gesendet wird.

Das hier beschriebene Konzept basiert insbesondere darauf, dass eine Verkehrseinrichtung, insbesondere eine Bake, insbesondere ein Leitkegel, in die Lage versetzt wird, zu kommunizieren, insbesondere ab einem Moment einer Errichtung einer Baustelle, also insbesondere dann, wenn die Verkehrseinrichtung aufgestellt wird. Es werden insbesondere Informationen an Kraftfahrzeuge gesendet, um diese bei der Orientierung zu unterstützen. Dazu ist insbesondere vorgesehen, dass die Verkehrseinrichtung folgende Informationen übermittelt, insbesondere allein oder in Kombination: ihre jeweilige Position, welche eine absolute oder relativ zu bekannten Fixpunkten, wie zum Beispiel Kilometermarkierungen und Fahrspuren, sein kann; Informationen zu dem Bereich, den die Verkehrseinrichtung absperrt (die Bereichsinformation); zusätzliche semantische Informationen wie zum Beispiel Geschwindigkeitslimit, Breite und/oder Krümmung des oder der Fahrstreifen.

Es ist vorteilhaft, wenn eine Positionierung zum einen sehr genau ist, denn es muss zum Beispiel eine Sperrung einer halben Fahrspur, eine übliche Fahrspurbreite beträgt 3,25 m bis 3,75 m, erkannt werden. Zum anderen ist es vorteilhaft, wenn die Positionierung sehr schnell und sehr kostengünstig erfolgt, da meist viele Verkehrseinrichtungen in kurzer Zeit aufgestellt werden müssen. Für eine Positionierung, also das Ermitteln bzw. Bestimmen der Position der Verkehrseinrichtung kann zum Beispiel vorgesehen sein, dass die Verkehrseinrichtung einen eigenen Positionssensor umfasst. Zum Beispiel kann vorgesehen sein, dass der Verkehrseinrichtung bei ihrem Aufstellen ihre Position übermittelt wird. Zum Beispiel kann vorgesehen sein, dass eine Position der Verkehrseinrichtung zur Laufzeit gelernt wird. Dies kann zum Beispiel dadurch erfolgen, dass ein externes Kraftfahrzeug mit einer entsprechend genauen kraftfahrzeugeigenen Sensorik an der Verkehrseinrichtung vorbeifährt, diese präzise vermisst und ihr dann die Position übermittelt. In diesem Fall empfängt also die Kommunikationsschnittstelle der Verkehrseinrichtung eine Position der Verkehrseinrichtung über das drahtlose Kommunikationsnetzwerk und speichert diese empfangene Position im Speicher, wobei anschließend die Kommunikationsschnittstelle die gespeicherte empfangene Position der Verkehrseinrichtung über das drahtlose Kommunikationsnetzwerk zum Beispiel an Kraftfahrzeuge und/oder an eine RSU sendet.

Damit die Verkehrseinrichtung die notwendigen Informationen an Kraftfahrzeuge übermitteln kann, ist zum Beispiel vorgesehen, dass jede Verkehrseinrichtung mit einer zentralen Einheit, zum Beispiel einer RSU, kommuniziert, wobei von der zentralen Einheit die entsprechenden Informationen zum Beispiel aggregiert werden, sodass zum Beispiel durch die zentrale Einheit dann anschließend an die Kraftfahrzeuge aggregierte Informationen verteilt werden.

Zum Beispiel ist vorgesehen, dass zur Übermittlung der notwendigen Informationen die Verkehrseinrichtung direkt mit den Kraftfahrzeugen kommuniziert. Zum Beispiel ist die Kommunikationsschnittstelle eingerichtet, eine Kurzstrecken-Kommunikation durchzuführen. Dies bietet insbesondere den Vorteil, dass jede einzelne Verkehrseinrichtung, sobald sie aufgestellt und aktiviert ist, die entsprechenden Informationen an Kraftfahrzeuge übermitteln kann. Somit können quasi in Echtzeit die notwendigen Informationen über eine Einrichtung einer Baustelle kommuniziert werden.

## Patentansprüche

1. Verkehrseinrichtung (101, 411), umfassend:
einen Speicher (103), welcher eingerichtet ist, eine Position der Verkehrseinrichtung (101, 411) zu speichern, und
eine Kommunikationsschnittstelle (105), welche eingerichtet ist, die gespeicherte Position über ein drahtloses Kommunikationsnetzwerk zu senden.

2. Verkehrseinrichtung (101, 411) nach Anspruch 1, wobei der Speicher (103) eingerichtet ist, zumindest eine Bereichsinformation über einen durch die Verkehrseinrichtung (101, 411) abgesperrten Bereich (409) zu speichern, wobei die Kommunikationsschnittstelle (105) eingerichtet ist, die gespeicherte zumindest eine Bereichsinformation über das drahtlose Kommunikationsnetzwerk zu senden.

3. Verkehrseinrichtung (101, 411) nach Anspruch 1 oder 2, wobei der Speicher (103) eingerichtet ist, zumindest eine semantische Information über ein Umfeld der Verkehrseinrichtung (101, 411) zu speichern, wobei die Kommunikationsschnittstelle (105) eingerichtet ist, die gespeicherte zumindest eine semantische Information über das drahtlose Kommunikationsnetzwerk zu senden.

4. Verkehrseinrichtung (101, 411) nach Anspruch 3, wobei die zumindest eine semantische Information ein oder mehrere Elemente der folgenden Gruppe von semantischen Informationen umfasst: Geschwindigkeitslimit, Breite eines oder mehrerer Fahrstreifen, Krümmung eines oder mehrerer Fahrstreifen.

5. Verkehrseinrichtung (101, 411) nach einem der vorherigen Ansprüche, umfassend ferner einen Positionssensor zum Erfassen einer Position der Verkehrseinrichtung (101, 411), wobei der Speicher (103) eingerichtet ist, die erfasste Position zu speichern, wobei die Kommunikationsschnittstelle (105) eingerichtet ist, die gespeicherte erfasste Position über das drahtlose Kommunikationsnetzwerk zu senden.

6. Verkehrseinrichtung (101, 411) nach einem der vorherigen Ansprüche, wobei die Kommunikationsschnittstelle (105) eingerichtet ist, eine Position der Verkehrseinrichtung (101, 411) über das drahtlose Kommunikationsnetzwerk zu empfangen, wobei der Speicher (103) eingerichtet ist, die empfangene Position der Verkehrseinrichtung (101, 411) zu speichern, wobei die Kommunikationsschnittstelle (105) eingerichtet ist, die gespeicherte empfangene Position der Verkehrseinrichtung (101, 411) über das drahtlose Kommunikationsnetzwerk zu senden.

7. Verkehrseinrichtung (101, 411) nach einem der vorherigen Ansprüche, wobei die Position eine absolute und/oder eine relativ zu einer vorbestimmten Referenzposition relative Position umfasst.

8. Verkehrseinrichtung (101, 411) nach einem der vorherigen Ansprüche, wobei die Kommunikationsschnittstelle (105) eingerichtet ist, die gespeicherte Position über das drahtlose Kommunikationsnetzwerk an eine RSU und/oder direkt an ein Kraftfahrzeug im Umfeld der Verkehrseinrichtung (101, 411) zu senden.

9. Verkehrseinrichtung (101, 411) nach einem der vorherigen Ansprüche, welche ein Element ausgewählt aus der folgenden Gruppe von Verkehrseinrichtungen (101, 411) ist: Schranke, Sperrpfosten, Absperrgerät, Leiteinrichtung, Absperrschranke, Leitbake, Leitschwelle, Leitbord, Leitkegel, fahrbare Absperrtafel, fahrbare Absperrtafel mit Blinkpfeil, Richtungstafel in Kurven, Leitplatte, Leitmal, Leitpfosten, Parkwarntafel.

10. Verfahren zum Betreiben einer Verkehrseinrichtung (101, 411) nach einem der vorherigen Ansprüche, umfassend die folgenden Schritte:
Speichern (201) einer Position der Verkehrseinrichtung (101, 411) in dem Speicher (103) und
Senden (203) der gespeicherten Position über das drahtlose Kommunikationsnetzwerk mittels der Kommunikationsschnittstelle (105).

11. Computerprogramm (303), umfassend Befehle, die bei Ausführung des Computerprogramms (303) durch einen Computer, insbesondere durch die Verkehrseinrichtung (101, 411) nach einem der Ansprüche 1 bis 9, diesen veranlassen, ein Verfahren gemäß Anspruch 10 auszuführen.

12. Maschinenlesbares Speichermedium (301), auf dem das Computerprogramm (303) nach Anspruch 11 gespeichert ist.
